Europäisches Patentamt

European Patent Office

Office européen des brevets

(19)

(11) Veröffentlichungsnummer: **0 165 379 B1**

(12) **EUROPÄISCHE PATENTSCHRIFT**

(45) Veröffentlichungstag der Patentschrift:
07.12.88

(51) Int. Cl.⁴: **G 01 P 3/486**, G 01 D 5/36

(21) Anmeldenummer: **85102678.1**

(22) Anmeldetag: **08.03.85**

(54) Inkremental-Sensor.

(30) Priorität: **19.05.84 DE 3418799**

(43) Veröffentlichungstag der Anmeldung:
**27.12.85 Patentblatt 85/52**

(45) Bekanntmachung des Hinweises auf die Patenterteilung:
**07.12.88 Patentblatt 88/49**

(84) Benannte Vertragsstaaten:
**AT BE CH FR GB IT LI NL**

(56) Entgegenhaltungen:
**EP-A- 0 076 858**
**EP-A- 0 179 918**
**DE-A- 1 952 630**
**DE-A- 2 339 874**
**US-A- 4 117 460**

(73) Patentinhaber: **MANNESMANN Aktiengesellschaft, Mannesmannufer 2, D-4000 Düsseldorf 1 (DE)**

(72) Erfinder: **Babsch, Alfred, St. Jaokobstrasse 14, D-7900 Ulm-Söflingen (DE)**
Erfinder: **Beth, Dieter, Junginger Strasse 16, D-7911 Thalfingen (DE)**
Erfinder: **Panzer, Werner, Frühlingstrasse 16, D-7913 Senden-Wullenstetten (DE)**
Erfinder: **Stempfle, Johann, Dipl.-Ing,, Haus Nr. 19, D-7914 Pfaffenhofen-Erbishofen (DE)**

## Beschreibung

Die Erfindung betrifft einen Inkremental-Sensor für die Umwandlung geradliniger oder drehender Bewegungen in elektrische Impulsfolgen, bestehend aus einem Lichtsender und einem fotoelektrischen Wandler und einer in einem Bewegungsspalt zwischen Lichtsender und Wandler bewegten teils lichtdurchlässigen, teils lichtundurchlässigen Markierungsspur, wobei die optische Verbindung von Lichtsender und Wandler mittels Lichtwellenleitern gebildet ist und wobei jeweils einen Funktionskreis bildende Lichtwellenleiter durch den Bewegungsspalt unterbrochen sind und im Bereich des Bewegungsspaltes auf einer Achse und zu dem Bewegungsspalt senkrecht verlaufen.

Derartige Inkremental-Sensoren dienen der Steuerung und/oder der Regelung von Maschinen, Geräten bzw. für deren Teile, die mit gleichförmigen Bewegungen, wie z.B. hin- und hergehenden Bewegungen eines Schlittens angetrieben werden. Der Antrieb wird hierbei gleichförmig kontinuierlich oder in gleichgrossen Schritten bewegt, um für eine bestimmte Position des bewegten Teils eine vorherbestimmte Operation auszuführen. Derartige Positionssteuerungen werden z.B. für Drucker, insbesondere Matrixdrucker, angewendet. Die Bewegungen des Teils können hierbei geradlinig oder kreisförmig sein.

Die durch den Inkremental-Sensor erzeugten elektrischen Impulsfolgen werden nach Verstärkung einer Schaltungsanordnung zugeführt, von der die Steuersignale für den elektrischen Antriebsmotor abgegriffen werden.

Ein bekannter Inkremental-Sensor (DE-AS 23 39 874) sucht Taumelbewegungen der Schlitzscheibe gegenüber dem Abtastkopf zu vermeiden. Ausserdem strebt die bekannte Lösung an, die üblicherweise vier fotoelektrischen Empfänger (Foto-Transistoren), die in einer sich quer zur Bewegungsrichtung der Markierungsspur erstreckenden Reihe angeordnet sind und deren sinusförmig modulierte Signale um 0°, 90°, 180° und 270° phasenverschoben sind, hinsichtlich der Schlitzabstände der Markierungsspur zu verbessern. Hierzu werden in bekannter Weise die beiden für zwei sinusförmig modulierte Signale vorgesehenen Abtastvorrichtungen einem einzigen Schlitz zugeordnet. Dadurch wird ein Einfluss von Taumelbewegungen der Schlitzscheibe auf die Phasenbeziehung der Impulsfolgen vermieden und die Phasenbeziehungen erscheinen deshalb leicht justierbar, weil die beiden Abtastvorrichtungen (Lichtsender und Empfänger) an einem gemeinsam, um einen zwischen den Abtastvorrichtungen liegenden Schwenkpunkt verdrehbaren und feststellbaren Trägerkörper angebracht sind.

Es hat sich jedoch gezeigt, dass die Winkeleinstellung alleine nicht das ausschlaggebende Problem darstellt, sondern dass bei Herstellung, Montage und Justierung der Teile weitere Ungenauigkeiten auftreten und dass eine Verstellbarkeit des Inkremental-Sensors auf nebeneinander parallel angeordnete Markierungsspuren zu einer erheblichen Steigerung der Schwierigkeiten führt.

Ausserdem genügt die rein mechanische Justierung der Teile nicht. Vielmehr treten bei hohen Genauigkeitsanforderungen mehr und mehr elektrische Probleme auf. Ein solches Problem bildet die notwendige Abgleichung des Arbeitspunktes von Lichtstrahlenempfänger und Wandler. Fernerhin treten Probleme der Änderung der Betriebstemperatur von Lichtsender und Lichtempfänger auf sowie Probleme der Alterung der Lichtsender, die üblicherweise aus lichtemittierenden Dioden gebildet werden.

Ein besonderes Problem besteht jedoch darin, dass die Wandler, die aus Foto-Transistoren gebildet werden, zwei gewichtige Nachteile aufweisen, nämlich mit steigender Temperatur die Verstärkung zu erhöhen und bei steigender Frequenz die Verstärkung zu vermindern. Die lichtemittierende Diode, die als Lichtsender dient, kann zwar die Temperaturabhängigkeit des Fototransistors zum Teil kompensieren, weil ihre Strahlungsleistung mit steigender Temperatur abnimmt. Die Kompensationserscheinung tritt jedoch nur ein, wenn der Temperaturgang des Fototransistors mit demselben Faktor arbeitet wie der Strahlungsleistungsabfall des Lichtsenders bzw. der Fotodiode. Aufgrund dieser physikalischen Gegebenheiten sind Fertigungsprobleme unvermeidbar.

Der eingangs bezeichnete Inkremental-Sensor ist bekannt aus den Dokumenten EP-A-0 076 858 bzw. DE-A-19 52 630. Diese Lösungen beschäftigen sich jedoch nur theoretisch mit den Schaltungsfunktionen solcher Sensoren, ohne jeweils praktisch ausführbare Vorschläge zu unterbreiten. Insbesondere wird die Handhabung und die Verarbeitung der Lichtwellenleiter nicht beschrieben. Eine andere Lösung ist aus dem nach dem Anmeldedatum der vorliegenden Patentanmeldung veröffentlichten europäischen Anmeldung EP-A-0 179 918 bekannt. Dieses Dokument beschreibt ebenfalls nur die Anwendung von Lichtwellenleitern bei Inkremental-Sensoren. Die zur Herstellung solcher Inkremental-Sensoren bedeutenden Kenntnisse der Herstelltechnik fehlen nach dem Stand der Technik.

Der Erfindung liegt die Aufgabe zugrunde, den Aufwand für Abgleich und Justage eines Inkremental-Sensors bei gleichzeitiger Steigerung der Genauigkeit hinsichtlich Signalbildung sowie Ausdehnung der Abtastung auf mehrere Markierungsspuren im optischen Bereich zu vermindern.

Die gestellte Aufgabe wird erfindungsgemäss dadurch gelöst, dass die Lichtwellenleiter auf einem in einem Haltegehäuse positionierten Trägerkörper in um den Trägerkörper umlaufenden Nuten in Form von Lichtleitfasern eingelassen und die Nuten mit den Lichtleitfasern und die Hohlräume zwischen dem Trägerkörper und dem Haltegehäuse mit einer Füllmasse verschlossen sind. Die Erfindung vermeidet zunächst Schwierigkeiten bei Herstellung, Montage und Justierung der Einzelteile. Ausserdem ergibt sich durch diese optische Verbindung von Lichtsender und Wandler eine höhere Genauigkeit der Lichtübertragung, da die

Enden der Lichtwellenleiter im Bereich des Bewegungsspaltes für die Markierungsspur äusserst präzise liegen können. Ausserdem wird eine Justierung völlig eingespart, weil die Lage der Lichtwellenleiter durch das jeweils gewählte Herstellverfahren bereits fest bestimmt werden kann.

Diese vorteilhafte Lösung beruht auf der Überlegung, dass derartige Lichtleitfasern einen Durchmesser von 0,1 bis 0,5 mm aufweisen können, so dass die Erfindung die Manipulation derartiger Lichtleitfasern während des Herstellverfahrens für den Inkremental-Sensor erheblich vereinfacht; so wird die Lage der Einzelteile gesichert.

Die Erfindung ist dahingehend weitergebildet, dass in den Nuten Gruppen von mehreren, unterschiedlichen Funktionskreisen angehörenden Lichtleitfasern vorgesehen sind. Hierbei wird der Effekt von Lichtleitfasern ausgenutzt, die von aussen keine Störlichtwellen aufnehmen, so dass mehrere eigene Lichtwellen übertragende Lichtleitfasern unmittelbar nebeneinander, sich berührend angeordnet werden können.

Eine weitere Verbesserung der Erfindung besteht darin, dass an einem Längsende eines länglichen Trägerkörpers der Bewegungsspalt für die Scheibe mit den Schlitzblenden, Strichrastern oder dgl. und am anderen Längsende ein gemeinsames Anschlussglied für Lichtsender und Wandler angeordnet sind. Das gemeinsame Anschlussglied für Lichtsender und Wandler führt nicht zum Verwechseln von Lichtsender und Empfänger, vermeidet Fertigungsschwierigkeiten und erspart Justage der Optik und kann den Lichtleitfasern ausreichend genau zugeordnet werden.

Die genaue Lage der Einzelteile wird ferner dadurch unterstützt, dass das Haltegehäuse mit Verriegelungsmitteln für eine Sender- und Empfänger-Baugruppe versehen ist, die diese an den Trägerkörper andrücken.

Für die Bildung eines genauen Signals ohne Abgleich und besonderen Montage- bzw. Justierarbeiten ist es bei Verwendung von Dreifach-Foto-Dioden bzw. von Dreifach-Foto-Transistoren besonders vorteilhaft, dass Gruppen von drei Lichtleitfasern jeweils einer Markierungsspur von Schlitzblenden, Strichrastern und dgl. zugeordnet sind.

Vorteilhaft ist ferner, dass eine lichtundurchlässige Abdeckung für das gemeinsame Anschlussglied vorgesehen ist. Die Abdeckung hält Störsignale von einem transparenten Anschlussglied fern.

Ein besonders kompakter Inkremental-Sensor entsteht ferner dadurch, dass die Abdeckung als Leiterplatte ausgebildet ist. In diesem Fall sind kurze Leiterwege und eine geschlossene Baueinheit gegeben.

Ausführungsbeispiele der Erfindung sind in der Zeichnung dargestellt und werden im folgenden näher beschrieben. Es zeigen

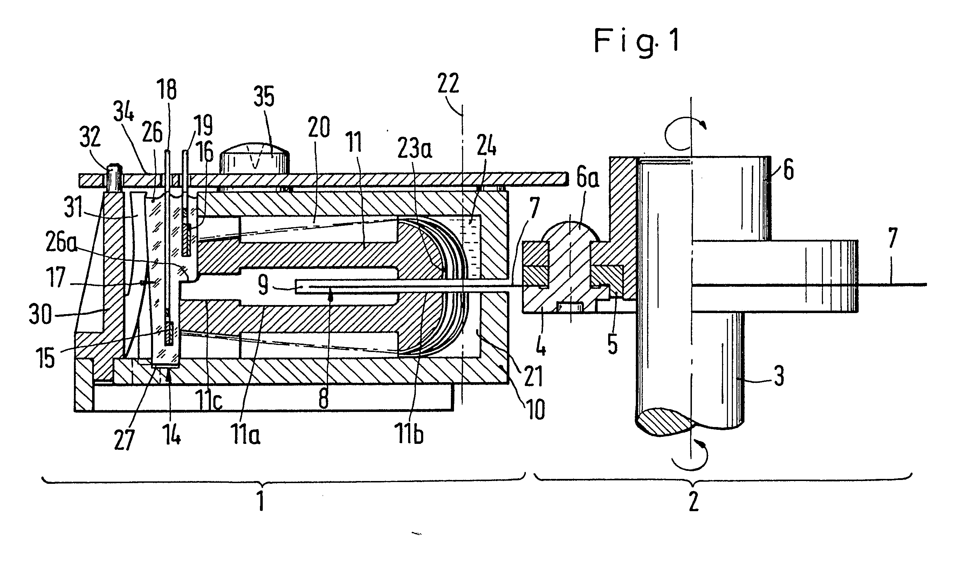

Fig. 1 einen senkrechten Querschnitt durch den Inkremental-Sensor mit Markierungsspuren in einem Rotationssystem,

Fig. 2 die zu Fig. 1 gehörende Draufsicht,

Fig. 3 einen vergrösserten Ausschnitt aus Fig. 2 betreffend die Anordnung der Lichtleitfasern über drei Markierungsspuren und

Fig. 4 einen senkrechten Querschnitt durch die Nuten mit den Lichtleitfasern für ein System mit Dreifach-Leucht-Dioden bzw. Dreifach-Foto-Dioden.

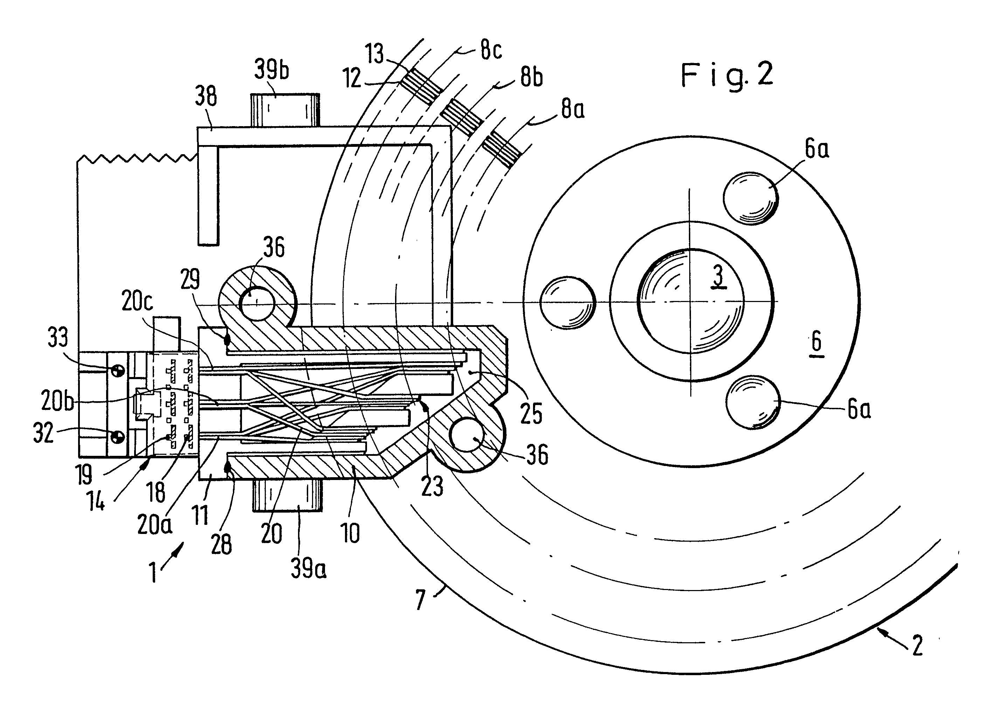

Der Inkremental-Sensor 1 tastet Schrittbewegungen eines rotierend (oder geradlinig) bewegten Maschinen- oder Geräteteils 2 ab, um aus diesen Bewegungen einzelne elektronische Impulse zu erzeugen, mit denen ein Antriebsmotor bzw. andere Mess-, Steuer- oder Regelmittel beeinflusst werden. Das Maschinen- oder Geräteteil 2 besteht aus der Motorwelle 3, mit der mittels Flanschteilen 4, 5 und 6 mit Befestigungselementen 6a eine kreisrunde ebene Scheibe 7 verbunden ist und damit mit der Motorwelle 3 in Umdrehung versetzt wird. Die Motorwelle 3 kann Teil eines zu regelnden Antriebs sein oder auch aus einem extrem genaulaufenden Eichantrieb bestehen. Auf der Scheibe 7 befindet sich zumindest eine Markierungsspur 8. Im Ausführungsbeispiel nach Fig. 2 sind parallele Markierungsspuren 8a, 8b und 8c angeordnet. Die Markierungsspuren 8 bzw. 8a bis 8c durchlaufen kontinuierlich den Bewegungsspalt 9 in einem Haltegehäuse 10 sowie in einem Trägerkörper 11.

Die Markierungsspuren 8 (8a bis 8c) bestehen aus Schlitzen 12 bzw. Stegen 13, die jeweils dieselbe Breite aufweisen. Die Scheibe 7 besteht meist aus Metall. Anstelle der Schlitze 12 und der Stege 13 kann auch auf einer lichtdurchlässigen Scheibe 7 ein lichtundurchlässiger Strichraster angeordnet sein. Eine solche Form der Markierungsspur 8 bildet eine Glasscheibe, die z.B. 0,1 mm breite radiale Markierungen trägt, die aus aufgedampftem Aluminium bestehen und im Fotoätzverfahren hergestellt sind.

Das Haltegehäuse 10 trägt ausser dem Trägerkörper 11 eine Sender- und Empfänger-Baugruppe 14, die sich spaltfrei an den Trägerkörper 11 anfügt. Diese Sender- und Empfänger-Baugruppe 14 nimmt einen Lichtsender 15 auf und gleichzeitig, was besonders vorteilhaft ist, einen Wandler 16, die beide in einem einheitlichen Körper 17 aus transparentem Werkstoff angeordnet und mit Anschlussleitungen 18 und 19 versehen sind. Die Anschlussleitungen 18 und 19 führen zu einer weiter nicht dargestellten Verstärkerschaltung, die die Signale in gewünschter Form moduliert bzw. digitalisiert.

Die optische Verbindung des Lichtsenders 15 und des Wandlers 16 bilden Lichtwellenleiter 20. Im Bereich 21 des Bewegungsspaltes 9 verlaufen die Lichtwellenleiter 20 genau senkrecht zum Bewegungsspalt 9 und paarweise auf jeweils derselben Achse 22. Die Lichtwellenleiter 20 werden aus 0,1 bis 0,5 mm dicken Lichtleitfasern (aus Glas) 20a, 20b bzw. 20c hergestellt und sind vor Einfräsen des Bewegungsspaltes 9 in Nuten 23 gewikkelt, so dass ihre Lage im Bereich 21 nur abhängig vom Verlauf des Nutengrundes 23a ist. Nach dem Wickeln werden die Nuten 23 mit einer Füllmasse 24 verschlossen, die in teigigem oder festem Zu-

stand die Lichtleitfasern 20a, 20b und 20c fixiert. Die Füllmasse 24 kann ausserdem die zwischen dem Haltegehäuse 10 und dem Trägerkörper 11 entstehenden Hohlräume 25 ausfüllen.

Grundsätzlich genügen pro Lichtsender 15 bzw. Wandler 16 zwei Lichtwellenleiter 20, um ein phasenverschobenes Signal an den Anschlussleitungen 18 und 19 abzugreifen und einer Verstärkerschaltung zuführen zu können.

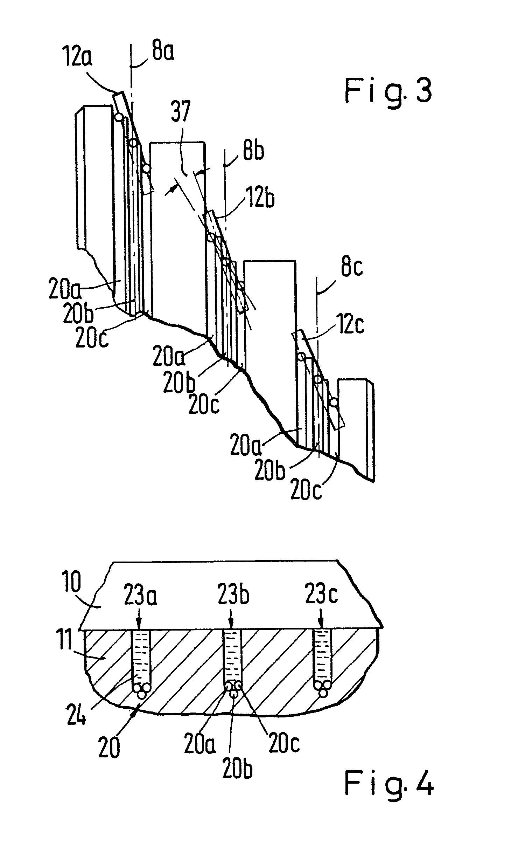

Gemäss einem zweiten Ausführungsbeispiel (Fig. 2 und 4) ist ein höchster Genauigkeit dienendes System vorgesehen. Hierzu sind in den Nuten 23 jeweils Gruppen von Lichtwellenleitern 20, z.B. in der mittleren Nute 23b die Lichtleitfasern 20a, 20b und 20c angeordnet. Hier wird der Lichtsender 15 durch eine Dreifach-Leucht-Diode (LED) gebildet und der Wandler 16 durch eine Dreifach-Foto-Diode. Aussliegende Lichtleitfasern 20a und 20c erzeugen jeweils ein um 90° Phasenwinkel einem Referenzsignal der mittleren Lichtleitfasern 20b voreilendes bzw. nacheilendes Signal. Das Referenzsignal befindet sich zeitlich stets in der Mitte zwischen den aussenliegenden Signalen, so dass die gewünschte Sinusmodulation von zwei Signalen, die gegeneinander um 180° phasenverschoben sind, ausreichend genau eingehalten wird. Eine Umwandlung in Rechtecksignale der beiden äusseren Signale kann in einer entsprechenden Verstärker- und Vergleicherschaltung auf digitaler Basis erfolgen.

Der Trägerkörper 11 ist in länglicher Form 11a ausgestaltet und an seinem Längsende 11b mit dem Bewegungsspalt 9 und an dem anderen Längsende 11c mit einem gemeinsamen Anschlussglied 26 für den Lichtsender 15 und den Wandler 16 versehen, wobei eine Stufe 26a die Position des Lichtsenders 15 bzw. des Wandlers 16 zu den Lichtwellenleitern 20 festlegt. Das Anschlussglied 26 ragt ausserdem in eine Ausnehmung 27, um für die optische Kopplung zwischen dem Trägerkörper 11 und dem Anschlussglied 26 den höchsten Genauigkeitsgrad zu erreichen. Nach dem Einsetzen des Trägerkörpers 11 in das Haltegehäuse 10 wird der Trägerkörper 11 zusätzlich versiegelt, das durch die Verbindungsstellen 28 und 29 in Fig. 2 deutlich gemacht ist. Das anschliessend eingesetzte Anschlussglied 26 wird ausserdem noch durch Verriegelungsmittel 30, die eine Feder 31 aufweisen, sicher in Kontakt mit dem Trägerkörper 11 gehalten. Die Verriegelungsmittel 30 weisen Führungsstifte 32 und 33 auf, auf die eine Abdeckung 34 geschoben wird, wobei die Abdeckung 34 mittels Schrauben 35 in den zugehörigen Schraubenlöchern 36 festgezogen werden. Die Abdeckung 34 kann als Leiterplatte ausgeführt sein.

Die Sender- und Empfänger-Baugruppe 14 stellt wie beschrieben ein separates Bauteil dar, das leicht ausgetauscht werden kann, ohne die physikalischen Werte des Inkremental-Sensors zu ändern.

Ein weiteres Ausführungsbeispiel ergibt sich aus Fig. 3 in Verbindung mit Fig. 2. Es sind drei Markierungsspuren 8a, 8b, 8c vorgesehen, von denen jede unabhängig von der anderen benutzt werden kann. Über den Schlitzen 12a, 12b und 12c befinden sich jeweils unter dem spitzen Winkel 37 die drei Lichtleitfasern 20a, 20b und 20c, und zwar mit ihrem Querschnitt parallel zur Ebene des Bewegungsspaltes 9. Der Winkel 37 ist erforderlich, um die Phasenverschiebung von 180° zwischen den jeweils äusseren Signalen einer Markierungsspur 8a, 8b oder 8c zu erzielen. An einem Seitenbau 38 des Haltegehäuses 10 und gegenüberliegend befinden sich Rastnasen 39a und 39b für die Fixierung des Inkremental-Sensors 1.

Fig. 2 enthält darüber hinaus eine besondere Parallelschaltung von sämtlichen drei Markierungsspuren 8a, 8b und 8c: In diesem Fall sind von allen drei Markierungsspuren 8a bis 8c die jeweils äusseren Lichtleitfasern 20a einem Element des Dreifach-Wandlers 16 (Dreifach-Foto-Diode), die jeweils mittleren Lichtleitfasern 20b einem weiteren Element des Dreifach-Wandlers 16 und die anderen äusseren Lichtleitfasern 20c einem dritten Element des Dreifach-Wandlers 16 zugeordnet. Die einzelnen Elemente des (Dreifach-)Lichtsenders 15 (Dreifach-Leucht-Diode) sind den Lichtleitfasern 20a, 20b, 20c jeweils einer Markierungsspur 8a, 8b, 8c zugeordnet. Die Dreifach-Lichtsender 15 bzw. die Dreifach-Wandler 16 erzeugen jeweils in allen drei Lichtleitfasern 20a bis 20c dieselben physikalischen Grössen. Daraus ergibt sich eine sehr genaue und völlig justierfreie und abgleichfreie, sich auf die jeweiligen Temperaturverhältnisse einstellende Signalbildung.

**Patentansprüche**

1. Inkremental-Sensor für die Umwandlung geradliniger oder drehender Bewegungen in elektrische Impulsfolgen, bestehend aus einem Lichtsender (15) und einem fotoelektrischen Wandler (16) und einer in einem Bewegungsspalt (9) zwischen Lichtsender (15) und Wandler (16) bewegten teils lichtdurchlässigen, teils lichtundurchlässigen Markierungsspur (8), wobei die optische Verbindung von Lichtsender (15) und Wandler (16) mittels Lichtwellenleitern (20) gebildet ist, und wobei jeweils einen Funktionskreis bildende Lichtwellenleiter (20) durch den Bewegungsspalt (9) unterbrochen sind und im Bereich (21) des Bewegungsspaltes (9) auf einer Achse (22) und zu dem Bewegungsspalt (9) senkrecht verlaufen, dadurch gekennzeichnet, dass die Lichtwellenleiter (20) auf einem in einem Haltegehäuse (10) positionierten Trägerkörper (11) in um den Trägerkörper (11) umlaufenden Nuten (23) in Form von Lichtleitfasern (20a, 20b, 20c) eingelassen und dass die Nuten mit den Lichtleitfasern (20a, 20b, 20c) und die Hohlräume (25) zwischen dem Trägerkörper (11) und dem Haltegehäuse (10) mit einer Füllmasse (24) verschlossen sind.

2. Inkremental-Sensor nach Anspruch 1, dadurch gekennzeichnet, dass in den Nuten (23) Gruppen von mehreren, unterschiedlichen Funktionskreisen angehörenden Lichtleitfasern (20a, 20b, 20c) vorgesehen sind.

3. Inkremental-Sensor nach den Ansprüchen 1 und 2, dadurch gekennzeichnet, dass an einem Längsende (11b) eines länglichen Trägerkörpers (11) der Bewegungsspalt (9) für die Scheibe (8) mit den Schlitzblenden (12 bzw. 13), Strichrastern oder dgl. und am anderen Längsende (11c) ein gemeinsames Anschlussglied (26) für Lichtsender (15) und Wandler (16) angeordnet sind.

4. Inkremental-Sensor nach den Ansprüchen 1 bis 3, dadurch gekennzeichnet, dass das Haltegehäuse (10) mit Verriegelungsmitteln (30) für eine Sender- und Empfänger-Baugruppe (14) versehen ist, die diese an den Trägerkörper (11) andrücken.

5. Inkremental-Sensor nach den Ansprüchen 1 bis 4, dadurch gekennzeichnet, dass Gruppen von drei Lichtleitfasern (20a, 20b, 20c) jeweils einer Markierungsspur (8a, 8b, 8c) von Schlitzblenden (12, 13), Strichrastern und dgl. zugeordnet sind.

6. Inkremental-Sensor nach den Ansprüchen 1 bis 5, dadurch gekennzeichnet, dass eine lichtundurchlässige Abdeckung (34) für das gemeinsame Anschlussglied (26) vorgesehen ist.

7. Inkremental-Sensor nach Anspruch 6, dadurch gekennzeichnet, dass die Abdeckung (34) als Leiterplatte ausgebildet ist.

## Claims

1. Incremental sensor for converting linear or rotary movements into electrical pulse sequences, consisting of a light emitter (15) and a photoelectric transducer (16) and a partly transparent, partly opaque markcarrying track (8), moving in a movement gap (9) between light emitter (15) and transducer (16), wherein the optical connection between light emitter (15) and transducer (16) is formed by means of light wave conductors (20), and wherein light wave conductors (20) each forming one function circuit, are interrupted by the movement gap (9) and, in the region (21) of the movement gap (9), lie on an axis (22) and perpendicular to the movement gap (9), characterized in that the light wave conductors (20) are recessed in the form of photoconducting fibres (20a, 20b, 20c) on a support (11), positioned in a holding housing (10), in grooves (23) extending around the support (11), and that the grooves with the photoconducting fibres (20a, 20b, 20c) and the cavities (25) between the support (11) and the holding housing (10) are closed by a filling material (24).

2. Incremental sensor according to Claim 1, characterized in that groups of several photoconducting fibres (20a, 20b, 20c) belonging to different function circuits are provided in the grooves (23).

3. Incremental sensor according to Claims 1 and 2, characterized in that the movement gap (9) for the disc (8) comprising the slot apertures (12, 13 respectively), bar patterns or the like is disposed at one longitudinal end (11b) of an elongate support (11), and that a common connecting member (26) for light emitter (15) and transducer (16) is disposed at the other longitudinal end (11c).

4. Incremental sensor according to Claims 1 to 3, characterized in that the holding housing (10) is equipped with locking means (30) for an emitter and receiver assembly (14), which press the latter onto the support (11).

5. Incremental sensor according to Claims 1 to 4, characterized in that groups of three photoconducting fibres (20a, 20b, 20c) are each associated with one mark-carrying track (8a, 8b, 8c) of slot apertures (12, 13), bar patterns or the like.

6. Incremental sensor according to Claims 1 to 5, characterized in that an opaque cover (34) is provided for the common connecting member (26).

7. Incremental sensor according to Claim 6, characterized in that the cover (34) is constructed as a printed circuit board.

## Revendications

1. Détecteur incrémentiel pour la conversion de déplacements rectilignes ou rotatifs en successions d'impulsions électriques, détecteur constitué par un émetteur de lumière (15) et un convertisseur photo-électrique (16), et par une piste de repérage (8), en partie opaque et en partie transparente, déplacée dans un intervalle de déplacement (9) entre l'émetteur de lumière (15) et le convertisseur (16), la liaison optique entre l'émetteur de lumière (15) et le convertisseur (16) étant constituée par des guides d'ondes lumineuses (20), et chaque guide d'ondes lumineuses (20), constituant un circuit fonctionnel, étant interrompu par l'intervalle de déplacement (9) et s'étendant perpendiculairement par rapport à l'intervalle de déplacement (9) et sur un axe (22), dans la zone (21) de cet intervalle de déplacement (9), détecteur caractérisé en ce que les guides d'ondes lumineuses (20) sont insérés, sous la forme de fibres conductrices de la lumière (20a, 20b, 20c) sur une structure porteuse (11), positionnée dans un boîtier de maintien (10), dans des gorges (23) s'étendant autour de cette structure porteuse (11), tandis que les gorges contenant les fibres conductrices de la lumière (20a, 20b, 20c) et les espaces vides (25) entre la structure porteuse (11) et le boîtier de maintien (10) sont fermés par une masse de remplissage (24).

2. Détecteur incrémentiel selon la revendication 1, caractérisé en ce qu'il est prévu, dans les gorges (23), des groupes de plusieurs fibres conductrices de la lumière (20a, 20b, 20c), appartenant à des circuits fonctionnels différents.

3. Détecteur incrémentiel selon les revendications 1 et 2, caractérisé en ce qu'à une extrémité longitudinale (11b) d'une structure porteuse longiforme (11) sont disposés l'intervalle de déplacement (9) pour le disque (8) avec les diaphragmes à fente (12 ou bien 13), des trames à traits ou analogues, tandis qu'à l'autre extrémité longitudinale est disposé un organe de raccordement commun (26) pour l'émetteur de lumière (15) et le convertisseur (16).

4. Détecteur incrémentiel selon les revendications 1 à 3, caractérisé en ce que le boîtier de maintien (10) est muni de moyens de verrouillage (30) pour un groupe constitutif émetteur et récepteur (14), qui pressent ce groupe contre la structure porteuse (11).

5. Détecteur incrémentiel selon les revendications 1 à 4, caractérisé en ce que des groupes de trois fibres conductrices de la lumière (20a, 20b, 20c) sont respectivement associés à une piste de repérage (8a, 8b, 8c) de diaphragmes à fente (12, 13), de trames à traits et analogues.

6. Détecteur incrémentiel selon les revendications 1 à 5, caractérisé en ce qu'il est prévu pour l'organe de raccordement commun (26), un recouvrement transparent (34).

7. Détecteur incrémentiel selon la revendication 6, caractérisé en ce que le recouvrement (34) est une carte de circuits imprimés.

Fig. 1

Fig.2

Fig. 3

Fig. 4